(19) Europäisches Patentamt
European Patent Office
Office européen des brevets

(11) Publication number: 0 229 025 B1

(12) EUROPEAN PATENT SPECIFICATION

(45) Date of publication of patent specification: 03.11.93

(51) Int. Cl.[5]: C04B 35/00, C04B 35/02, C04B 35/66, C04B 35/84

(21) Application number: 87300034.3

(22) Date of filing: 06.01.87

# (54) Slaking-resistant refractory aggregates and process for producing the same.

(30) Priority: 07.01.86 JP 1216/86

(43) Date of publication of application: 15.07.87 Bulletin 87/29

(45) Publication of the grant of the patent: 03.11.93 Bulletin 93/44

(84) Designated Contracting States: DE FR GB IT NL

(56) References cited:
DE-B- 871 721
GB-A- 2 042 499

CHEMICAL ABSTRACTS, vol. 85, no. 10, 6th September 1976, page 285, abstract no. 67176k, Columbus, Ohio, US; S. PAWLOWSKI et al.: "Contribution to the development of the technology of calcareous refractories with increased resistance to hydration", & MATER. OGNIOTIWALE 1975, 27(6), 121-124

(73) Proprietor: OUIGLEY COMPANY INC.
235 East 42nd Street
New York, N.Y. 10017(US)

Proprietor: Rinkagaku Kogyo Company Limited
34 Shimbori
Shimminato-shi Toyama-ken 934(JP)

(72) Inventor: Asaka, Eiji
Korimoto 1325-41
Ichihara-shi Chiba-ken(JP)
Inventor: Ikeda, Yasuhiro
Yomaki 920-5
Misato-shi Saitama-ken 341(JP)
Inventor: Nakatsuchi, Kiyoshi
Nunoichi 386
Toyama-shi Toyama-ken 930-11(JP)
Inventor: Washizuka, Takatoshi
1-10-25 Shimizu-cho
Takaoka-shi Toyama-ken 933(JP)
Inventor: Nakagawa, Tatsuro
Tomari 425 Asahimachi Shimoniikawa-gun
Toyama-ken 939-07(JP)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

**CHEMICAL ABSTRACTS, vol. 97, no. 26, 27th December 1982, page 364, abstract no. 221861m; ASAHI DENKA KOGYO K.K.: "Hydration retardation of quicklime", & JP - A - 82 119 851 (26-07-1982)**

(74) Representative: **Boydell, John Christopher et al**
**Stevens, Hewlett & Perkins**
**1 Serjeants' Inn**
**Fleet Street**
**London EC4Y 1LL (GB)**

## Description

This invention relates to slaking-resistant refractory aggregates and a process for producing the same. More particularly, the invention relates to refractory aggregates comprising granular quicklime-containing clinker coated with a protective layer of certain scarcely soluble calcium phosphate(s) to improve the slaking resistance, and a process for producing such aggregates.

Quicklime-containing clinker is generally used as refractory aggregates for the repair of inner walls of steelmaking furnaces such as converters and electric furnaces. However, since quicklime is vulnerable to slaking, there are many problems in use of clinker with a high quicklime content as refractory aggregates in the ordinary ways of application. Therefore, improvement of the slaking resistance of such clinker is certain to widen the scope of its use and will, for instance, make such clinker useful as castable refractory aggregates. As a means for preventing slaking of clinker, various additives such as synthetic resins, sucrose, stearic acid, silicic acid or boric acid have been added to clinker, but this method does not always give a satisfactory effect. More recently, a method has been proposed in Japanese Kokai 90858/85 in which the clinker is heat treated under a carbon dioxide gas atmosphere and coated with a film of calcium carbonate.

In view of the above, this invention has been devised with the object of improving the slaking resistance of clinker by a simple and inexpensive means and widening the range of application of clinker as refractory aggregates.

According to this invention, there are provided slaking-resistant aggregates comprising granular guicklime-containing clinker coated with a protective layer of scarcely soluble calcium phosphate characterised in that the scarcely soluble calcium phosphate is at least one member selected from the group consisting of an apatite, a calcium orthophosphate, and a calcium condensed phosphate.

This invention also provides a process for producing slaking-resistant aggregates, which comprises keeping granular quicklime-containing clinker in intimate contact with a phosphoric acid and/or phosphate to coat the granular clinker surface with a protective layer of scarcely soluble calcium phosphate which is at least one member selected from the group consisting of an apatite, a calcium orthophosphate and a calcium condensed phosphate.

Fig. 1 shows the x-ray diffraction patterns of the protective layer of a clinker treated in accordance with the process of the present invention.

The term "quicklime-containing clinker" used in this invention refers principally to dolomite clinkers containing quicklime (CaO), which include calcined dolomite clinker, dead burned dolomite clinker, stabilized and half-stabilized dolomite clinker, and synthetic clinker. It is to be noted, however, that other types of clinker containing quicklime, such as calcia clinker (calcined lime clinker) or magnesia clinker are also usable as an aggregate material in this invention. In this specification, these types of clinkers usable in this invention are generically referred to simply as clinker.

The "scarcely soluble calcium phosphate" used in this invention for coating the granular clinker refers to certain calcium phosphates composed of calcium ions and phosphate ions produced from the reaction of CaO in the clinker with water and a phosphoric acid or phosphate. Therefore, when the term "phosphate" is used herein, it means not only single forms of phosphates but also complex salts consisting of two or more different phosphates. These scarcely soluble calcium phosphates are various types of apatite such as hydroxylapatite ($Ca_{10}(PO_4)_6(OH)_2$), chloroapatite ($Ca_{10}(PO_4)_6Cl_2$) and fluoroapatite ($Ca_{10}(PO_4)_6F_2$); orthophosphates such as calcium tertiary phosphate ($Ca_3(PO_4)_2$), calcium secondary phosphate ($CaHPO_4$), calcium primary phosphate ($Ca(H_2PO_4)_2$) and calcium secondary phosphate dihydrate ($CaHPO_4\ 2H_2O$); and calcium condensed phosphates such as calcium pyrophosphate ($Ca_2P_2O_7$) and calcium metaphosphate ($Ca(PO_3)_2$). Among these phosphates, hydroyylapatite, calcium secondary phosphate and calcium tertiary phosphate are especially preferred for use as a coating material in this invention.

The term "scarcely soluble" used herein is not necessarily defined by the solubility of the phosphates in water; when the calcium phosphate has the effect of preventing the permeation of water through the calcium phosphate coat formed on the surfaces of individual clinker particles and inhibiting the reaction of the water with CaO which forms the particle nucleus, that is, the effect of preventing slaking, such calcium phosphate is termed "scarcely soluble" in this invention. Therefore, calcium secondary phosphate which is slightly soluble in water also comes within the category of "scarcely soluble phosphates" in the meaning of this invention.

The mechanism of formation of hydroxylapatite, which is a typical example of scarcely soluble calcium phosphates, is shown below in terms of chemical formulae:

$$CaO + H_2O \rightarrow Ca(OH)_2$$

$$10Ca(OH)_2 + 6H_3PO_4 \rightarrow Ca_{10}(PO_4)_6(OH)_2 + 18H_2O$$

CaO in the clinker is reacted with water to form calcium hydroxide, which is further reacted with a phosphoric acid to produce hydroxylapatite insoluble in water. It is known that most of the calcium phosphates are gradually changed in the presence of water and finally turned into crystals having an apatite structure. It is thus believed that the scarcely soluble calcium phosphate coat formed according to this invention is principally composed of hydroxylapatite.

The formation mechanisms of some other scarcely soluble calcium phosphates are shown below:

$$3CaO + 2H_3PO_4 \rightarrow Ca_3(PO_4)_2 + 3H_2O$$

calcium tertiary phosphate

$$CaO + H_3PO_4 + H_2O \rightarrow CaHPO_4\ 2H_2O \xrightarrow{\text{heating}} CaHPO_4$$

calcium secondary phosphate dihydrate

$$\xrightarrow{\text{calcination}} Ca_2P_2O_7$$

calcium pyrophosphate

$$CaO + 2H_3PO_4 \rightarrow Ca(H_2PO_4)_2\ H_2O \xrightarrow{\text{heating}} Ca(H_2PO_4)_2$$

calcium primary phosphate monohydrate

$$\xrightarrow{\text{calcination}} CaH_2P_2O_7$$

acidic calcium pyrophosphate

$$\xrightarrow{\text{calcination}} Ca(PO_3)_2$$

calcium metaphosphate

In the above examples, the primary product obtained from the reaction of CaO and phosphoric acid, or the secondary product, is not always insoluble in water, but it is converted into a final water-insoluble product by heating or further calcination. In this invention, the once formed calcium phosphate coating film may be heated and/or calcined to chemically change it into a scarcely soluble coating film to promote the anti-slaking effect.

The material forming the scarcely soluble calcium phosphate coat for protecting the granular clinker surface is influenced not only by the phosphoric acid or phosphate used, but also by the aggregate preparation method, that is, clinker treating method, conditions, etc., and is full of variety. Under certain treating conditions, calcium hydroxide ($Ca(OH)_2$) produced from the reaction of CaO and water would not be perfectly converted into hydroxylapatite and remain in the coat. Also, MgO and other metal oxides in the clinker may be reacted with a phosphoric acid or phosphate to form magnesium phosphate and other scarcely soluble phosphates and stay in the calcium phosphate coat. These scarcely soluble phosphates other than the calcium phosphates and calcium hydroxide also serve to prevent slaking of clinker like scarcely soluble calcium phosphate as far as they are contained in the coat, so that it should be understood that they constitute a part of the calcium phosphate protective coat.

The process for producing slaking-resistant aggregates according to this invention is herein described. This process comprises keeping granular guicklime-containing clinker in intimate contact with a phosphoric

acid and/or phosphate to coat the granular clinker surface with a protective layer of scarcely soluble calcium phosphate which is at least one member selected from the group consisting of an apatite, a calcium orthophosphate and a calcium condensed phosphate. This process can be roughly classified into two types, namely wet process and dry process.

In the wet process, a solution, including slurry and dispersion, of phosphoric acid and/or phosphate is applied on the clinker particle surfaces. Actually, the clinker is sprayed with or dipped in the solution or is added and kneaded while the solution is maintained in a state of contact to thereby effect deposition or coating.

In the dry process, granular clinker and granular solid phosphate are mixed, heated and calcined. Since a solid phase reaction is conducted in the dry process, a heat treatment is essential for forming a scarcely soluble calcium phosphate coat, and usually calcination is performed at a temperature of 300 °C or higher.

A combination of the wet process and dry process is also usable. This combination method is advantageous when it is desired to further improve the slaking resistance by applying a heat treatment to the calcium phosphate coated clinker synthesized by the wet process. In case that the phosphate coat formed by the wet process is composed of calcium phosphates which are not insoluble in water as exemplified before, such calcium phosphates can be changed into water-insoluble ones to make a scarcely soluble phosphate coat by heat treating the coated clinker to attain the desired end, as previously described.

The granular clinker used in this invention may be of any particle size, within the coarse range (5-1 mm), middle range (1-0.25 mm) and fine range (less than 0.25 mm). The particle size distribution is not specifically limited, but preferably the clinker within the middle range is used.

For effecting substantial coating on the surfaces of individual clinker particles, it is appropriate to use 0.25-10 parts by weight of phosphoric acid and/or phosphate to 100 parts by weight clinker. If the former is less than 0.25 part by weight, the coating may become imperfect or the coating thickness may prove insufficient, resulting in an unsatisfactory slaking resistance of the coated clinker. On the other hand, if the amount of the phosphoric acid and/or phosphate used exceeds 10 parts by weight, although an excellent slaking resistance is obtained, the utility value of the obtained clinker as refractory aggregates is greatly reduced because the refractory using such aggregates is short in hardening time and, therefore, worsened in workability and also reduced in hot bending strength.

The phosphoric acid used in this invention is orthophosphoric acid or condensed phosphoric acids, such as polyphosphoric acid, metaphosphoric acid and ultraphosphoric acid, and the phosphates usable in this invention are, for instance, the phosphates of alkali metals, alkaline earth metals, zinc, iron, aluminum and ammonium. Preferably, orthophosphoric acid and/or condensed phosphoric acid is used as the phosphoric acid, and at least one member selected from the group consisting of the orthophosphates and condensed phosphates of alkali metals, alkaline earth metals, zinc, aluminum, iron and ammonium is used as the phosphate. Sodium, potassium, ammonium, magnesium, calcium and aluminum phosphates are especially preferred.

The wet process is now described in greater detail. According to this process, granular clinker is immersed in an aqueous solution or dispersion of a phosphoric acid and/or phosphate for a short time and then the clinker particles with phosphoric acid and/or phosphate adhering on their surfaces are dried so that a protection layer made of scarcely soluble calcium phosphate is formed on the surfaces of individual clinker particles. Immersion time is decided according to the amount of clinker used, but usually immersion for a few seconds to 20 to 30 minutes is sufficient. The phosphates used in the wet process are such as mentioned before, but acidic sodium metaphosphate, acidic aluminum phosphate, acidic sodium pyrophosphate, acidic sodium hexametaphosphate and sodium ultraphosphate are preferred.

In an alternate method of the wet process, granular clinker is sprayed with a solution of phosphoric acid and/or phosphate and then the clinker particles having a deposit of phosphoric acid and/or phosphate on their surfaces are dried to thereby form a protective coat of scarcely soluble calcium phosphate on the clinker surfaces. The phosphates usable in this method include sodium primary phosphate in addition to those suitable for the immersion method indicated above. In this alternate method, it is desirable to calcine the dried clinker.

In still another method of the wet process, a solution of phosphoric acid and/or phosphate is added to granular clinker and kneaded, followed by drying of the clinker particles having a deposit of phosphoric acid and/or phosphate to thereby produce a scarcely soluble calcium phosphate coat on the clinker particle surfaces. According to this method, whether an effective coat has formed or not is decided by measuring the pH of the clinker surface. Therefore, it is necessary to continue kneading until the clinker surface shows a pH value indicating alkalinity (pH of about 8.0). After kneading, the treated clinker is dried and preferably further calcined as in the previously described two methods.

In any of the three methods, drying of clinker is carried out at about 100°C or higher for 10 minutes to a few hours by an ordinary drying method such as through-flow drying or drying by rotary drier.

The dry process is now discussed in more detail. The dry process is a method in which granular clinker is mixed with solid phosphate and calcined at a temperature of at least 300°C. As the phosphate used in this method, sodium primary phosphate, calcium secondary phosphate and calcium primary phosphate are especially preferred. In this dry process, a good protective coat is not provided on clinker unless the clinker-phosphate mixture is sufficiently calcined, so that the mixture needs to be calcined at a temperature above 300°C for $\frac{1}{2}$ to several hours. Such calcination can be accomplished by using a known kiln such as a rotary kiln. Mixing of clinker and phosphate can be also achieved by using various known types of mixer such as a ribbon mixer or V-type mixer.

The slaking-resistant aggregates of this invention, as explained in detail in the examples given below, are excellent in slaking resistance and markedly improved over conventional clinkers. It should be understood that the amorphous refractories obtainable by adding other types of clinker, binder, water, and other ingredients to the slaking-resistant aggregates are also embraced within the scope of this invention.

The invention will be described in further detail below by way of the embodiments thereof.

In these examples, all concentrations are in weight percent.

Example 1

Approximately 2 kg of an aqueous solution comprising 23% of acidic sodium hexametaphosphate and 7% of phosphoric acid was prepared and placed in a container made of stainless steel. 500 g of commercial dead burned dolomite clinker (73.9% MgO, 24.1% CaO; bulk density 3.35 g/cm$^3$; porosity 2.0%; ignition loss 0.15%) was put into a stainless steel gauze basket and dipped in the phosphate-phosphoric acid aqueous solution for about 10 seconds. After dipping, the liquid was drained off and the gauze basket was vibrated to shake the clinker for about 15 minutes so that the phosphoric acid solution adhered to the clinker particles. The clinker was placed in a dryer and dried at about 110°C for one hour to obtain 508 g of treated clinker.

Example 2

500 g of dead burned dolomite clinker was put into a stainless steel gauze basket and sprayed with 60 g of a 30% aqueous solution of sodium primary phosphate. The basket was vibrated to shake the clinker therein for about 15 minutes to let the phosphate solution adhere to the clinker particles. Then the clinker was placed in a dryer and dried at about 110°C for one hour and the dried clinker was further calcined in an electrically-heated oven at about 400°C for 30 minutes to obtain 517 g of treated clinker.

Example 3

500 g of dead burned dolomite clinker was put into a stainless steel container, then 25 g of 40% phosphoric acid solution was added and the mixture kneaded. When kneading was continued for 20 minutes, the pH of the clinker particle surface became about 8, so kneading was stopped at this point. The clinker was then placed in a dryer and dried at 110°C for one hour to obtain 509 g of treated clinker.

Example 4

500 g of commercially available calcia clinker (0.8% MgO, 98.0% CaO; bulk density 3.09 g/cm$^3$; porosity 3.6%; ignition loss 0.50%) was charged into a stainless steel container and then 5 g of water was added thereto to wet the clinker particle surfaces. 20 g of powdery calcium primary phosphate was further added and kneaded with the clinker to have the calcium phosphate powder deposited on the clinker particle surfaces. This clinker was put into an electrically-heated oven and calcined at about 450°C for 30 minutes to obtain 515 g of treated clinker.

Example 5

About 2 kg of a 20% aqueous solution of aluminum primary phosphate was placed in a stainless steel container. 500 g of commercially available calcia clinker was put into a stainless steel gauze basket and dipped in the solution for about 10 seconds. After dipping, the liquid was drained off and the gauze basket was vibrated to shake the clinker therein for about 20 minutes so that the phosphate solution adhered to the

clinker particles. Then the clinker was placed in a dryer and dried at about 120 ° C for one hour to obtain 507 g of the treated clinker.

Slaking Test

The clinker specimens which underwent the anti-slaking treatment in Examples 1-5 were subjected to a slaking test to evaluate the slaking resistance of each treated clinker. The slaking test was conducted according to the method shown in Method 7 of the Japan Society for the Promotion of Science, "Slaking Test Method for Dolomite Clinker (Draft) II", Refractory Notebook (1976). The test results are shown in Table I.

Table I

| Specimen | Weight Increment, % | Retained on Sieve, % |
|---|---|---|
| Example 1 | 0.08 | 1.57 |
| 2 | 0.32 | 1.98 |
| 3 | 0.17 | 2.01 |
| Nontreated dolomite clinker | 0.75 | 3.53 |
| Example 4 | 6.83 | 20.12 |
| 5 | 6.47 | 19.91 |
| Nontreated calcia clinker | 13.48 | 34.33 |

As seen from Table I, the treated clinker specimens of Examples 1-5 are reduced in both weight increment and percentage retained on sieve in comparison with the nontreated clinker specimens, which indicates that the treated clinker is resistant to slaking.

Composition of Surface Protective Layer of Treated Clinker

Micro samples collected from the surface portion of the coated clinker obtained in each Example were analyzed by X-ray diffractometry to determine the composition of the protective layer, with the results of the analysis shown in Table II.

Table II

| Specimen Example | Composition: After drying | Composition: After Calcination |
|---|---|---|
| 1 | Hydroxylapatite<br>Calcium secondary phosphate (dihydrate)<br>$Na_2O$-CaO-$P_2O_5$-$H_2O$ complex salt | Hydroxylapatite<br>Calcium tertiary phosphate<br>Calcium pyrophosphate<br>$Na_2O$-CaO-$P_2O_5$ complex salt |
| 2 | $Na_2O$-CaO-$P_2O_5$ complex salt | $Na_2O$-CaO-$P_2O_5$ complex salt |
| 3 | Hydroxylapatite<br>Calcium secondary phosphate (dihydrate) | Hydroxylapatite<br>Calcium pyrophosphate<br>Calcium tertiary phosphate |
| 4 | Same as Example 3 | |
| 5 | Hydroxylapatite<br>Aluminum orthophosphate (amorphous) | Hydroxylapatite<br>Aluminum orthophosphate (amorphous) |

The specimens of Examples 1, 3 and 5 were dried and then fired in an electrically heated furnace at about 400 ° C for 30 minutes for the determination.

The X-ray diffraction patterns of the surface layer of the clinker obtained in Example 3 are shown in FIG. 1. The patterns were obtained using a G.M.C. detector, Cu,Ni target filter, voltage 30 kV, current mA, full scale count 400 c/s, time constant 2 s, scanning speed 1 ° 20/m, chart speed 10 mm/m, divergence slit $\frac{1}{2}$ ° , receiving slit 0.15 mm, scatter slit $\frac{1}{2}$ ° , parallel slit 4.9 ° and glancing angle 5 ° .

It can be understood from Table II and FIG. 1 that the surface layer of the treated clinker samples is composed of hydroxylapatite, calcium secondary phosphate, calcium tertiary phosphate, calcium pyrophosphate, $Na_2O$-CaO-$P_2O_5$ or aluminum orthophosphate.

Referential Example

Clinker prepared in the same way as in Example 1 was used as aggregates, and with these aggregates were mixed magnesia clinker in the ratios shown in Table 3, sodium hexametaphosphate in an amount of 1% by weight based on the weight of the aggregate composition, and a proper amount of water to produce castable refractory compositions. The properties (workability, hot bending strength and cracking when left at 110 ° C for 24 hours after drying) of these castable compositions were tested as described below. By way of comparison, similar compositions were produced by using nontreated clinker and their property values were likewise determined. The test results are shown in Table III.

Workability Test:

To clinker is slowly added water while agitating in a versatile mixer for a few minutes, to provide a castable refractory composition. A flow value is measured on a flow table. The time, in minutes, from the time of starting to add water to the time at which the measured flow value reached 110 mm is determined.

Hot Bending Strength Test:

The castable refractory composition provided in the same manner as in the workability test is cast into a paper mold of 2 x 2 x 8 cm in size, left to stand for about 20 hours and dried in an oven at 110 °C for 24 hours. This specimen is maintained in an electric furnace at each temperature of 800 °C, 1200 °C and 1400 °C for 30 minutes, and then subjected to the hot bending strength test. The hot bending strength is expressed in kg/cm$^2$.

Degree of Cracking Test:

The specimen to be used in the hot bending strength test is dried in an oven at 110 °C for 24 hours and then visually observed for the degree of cracking.

Table III

| Example | 1 | 2 | Comp. Example |
|---|---|---|---|
| Treated Dolomite Clinker | | | Nontreated Dolomite Clinker |
| (Example 1) | 30 parts by weight | 50 parts by weight | 30 parts by weight |
| Magnesia Clinker | 70 parts by weight | 50 parts by weight | 70 parts by weight |
| Workability | 60 | 45 | 45 |
| Degree of Cracking | small | small | great |
| Hot Bending Strength | | | |
| 800°C | 3 | 7 | 0.5 |
| 1,200°C | 16 | 18 | 5 |
| 1,400°C | 6 | 13 | 1.5 |

Comparison of a refractory composition using the aggregates of this invention with a refractory composition using nontreated aggregates reveals, as is clear from Table III, that the refractory composition according to this invention has excellent characteristics.

**Claims**

**1.** Slaking-resistant aggregates comprising granular quicklime-containing clinker coated with a protective layer of scarcely soluble calcium phosphate characterised in that the scarcely soluble calcium phosphate is at least one member selected from the group consisting of an apatite, a calcium orthophosphate and a calcium condensed phosphate.

2. The slaking-resistant aggregates according to claim 1, wherein the clinker is dolomite clinker or calcia clinker.

3. The slaking-resistant aggregates according to claim 1 or 2 wherein the scarcely soluble calcium phosphate is at least one member selected from the group consisting of hydroxylapatite, calcium secondary phosphate, calcium tertiary phosphate and a calcium condensed phosphate.

4. The slaking-resistant aggregates according to claim 1 wherein the clinker is dolomite clinker and the scarcely soluble calcium phosphate is hydroxylapatite.

5. A process for producing slaking-resistant aggregates, which comprises keeping granular quicklime-containing clinker in intimate contact with a phosphoric acid or phosphate to coat the granular clinker surface with a layer of scarcely soluble calcium phosphate which is at least one member selected from the group consisting of an apatite, a calcium orthophosphate and a calcium condensed phosphate.

6. A process for producing slaking-resistant aggregates, which comprises keeping granular quicklime-containing clinker in intimate contact with a phosphoric acid or phosphate and then calcining the contacted clinker at a temperature of 300°C or higher to coat the granular clinker surface with a protective layer of scarcely soluble calcium phosphate which is at least one member selected from the group consisting of an apatite, a calcium orthophosphate and a calcium condensed phosphate.

7. The process according to claim 5 or 6 wherein the intimate contact is attained by dipping the granular clinker into a solution of a phosphoric acid or phosphate and then drying the contacted clinker.

8. The process according to claim 5 or 6 wherein the intimate contact is attained by spraying the granular clinker with a solution of a phosphoric acid or phosphate and then drying the contacted clinker.

9. The process according to claim 6 wherein the intimate contact is attained by mixing a solid phosphate with the granular clinker.

10. The process according to claim 5 or 6 wherein the phosphoric acid or phosphate is used in the amount of 0.25-10 weight percent of the clinker.

11. The process according to claim 5 or 6 wherein the clinker is dolomite clinker or calcia clinker, the phosphoric acid is orthophosphoric acid or condensed phosphoric acid, and the phosphate is at least one member selected from the group consisting of orthophosphates and condensed phosphates of alkali metals, alkaline earth metals, zinc, aluminum, iron and ammonium.

## Patentansprüche

1. Zerfallbeständige Aggregate, umfassend körnigen, gebrannten Kalk enthaltenden Klinker, der mit einer Schutzschicht aus schwerlöslichem Calciumphosphat beschichtet ist, dadurch gekennzeichnet, daß das schwerlösliche Calciumphosphat mindestens ein Glied ist, das aus der aus einem Apatit, einem Calciumorthophosphat und einem kondensierten Calciumphosphat bestehenden Gruppe ausgewählt ist.

2. Zerfallbeständige Aggregate nach Anspruch 1, in denen der Klinker Dolomitklinker oder Calciumoxidklinker ist.

3. Zerfallbeständige Aggregate nach Anspruch 1 oder 2, in denen das schwerlösliche Calciumphosphat mindestens ein Glied ist, das aus der aus Hydroxylapatit, sekundärem Calciumphosphat, tertiärem Calciumphosphat und kondensiertem Calciumphosphat bestehenden Gruppe ausgewählt ist.

4. Zerfallbeständige Aggregate nach Anspruch 1, in denen der Klinker Dolomitklinker ist und das schwerlösliche Calciumphosphat Hydroxylapatit ist.

5. Verfahren zur Herstellung von zerfallbeständigen Aggregaten, welches umfaßt, daß man körnigen, gebrannten Kalk enthaltenden Klinker in engem Kontakt mit einer Phosphorsäure oder einem Phosphat hält, um die Oberfläche des körnigen Klinkers mit einer Schicht aus schwerlöslichem Calciumphosphat

zu beschichten, das mindestens ein Glied ist, das aus der aus einem Apatit, einem Calciumorthophosphat und einem kondensierten Calciumphosphat bestehenden Gruppe ausgewählt ist.

6. Verfahren zur Herstellung von zerfallbeständigen Aggregaten, welches umfaßt, daß man körnigen, gebrannten Kalk enthaltendem Klinker in engem Kontakt mit einer Phosphorsäure oder einem Phosphat hält und dann den kontaktierten Klinker bei einer Temperatur von 300 °C oder höher kalziniert, um die Oberfläche des körnigen Klinkers mit einer Schutzschicht aus schwerlöslichem Calciumphosphat zu beschichten, das mindestens ein Glied ist, das aus der aus einem Apatit, einem Calciumorthophosphat und einem kondensierten Calciumphosphat bestehenden Gruppe ausgewählt ist.

7. Verfahren nach Anspruch 5 oder 6, in dem der enge Kontakt durch Eintauchen des körnigen Klinkers in eine Lösung einer Phosphorsäure oder eines Phosphats und durch darauffolgendes Trocknen des kontaktierten Klinkers erzielt wird.

8. Verfahren nach Anspruch 5 oder 6, in dem der enge Kontakt durch Besprühen des körnigen Klinkers mit einer Lösung einer Phosphorsäure oder eines Phosphats und durch darauffolgendes Trocknen des kontaktierten Klinkers erzielt wird.

9. Verfahren nach Anspruch 6, in dem der enge Kontakt durch Mischen eines festen Phosphats mit dem körnigen Klinker erzielt wird.

10. Verfahren nach Anspruch 5 oder 6, in dem die Phosphorsäure oder das Phosphat in einer Menge von 0,25 bis 10 Gewichtsprozent des Klinkers verwendet wird.

11. Verfahren nach Anspruch 5 oder 6, in dem der Klinker Dolomitklinker oder Calciumoxidklinker ist, die Phosphorsäure Orthophosphorsäure oder kondensierte Phosphorsäure ist und das Phosphat mindestens ein Glied ist, das aus der aus Orthophosphaten und kondensierten Phosphaten von Alkalimetallen, Erdalkalimetallen, Zink, Aluminium, Eisen und Ammonium bestehenden Gruppe ausgewählt ist.

## Revendications

1. Agrégats résistant à l'extinction, comprenant un clinker granulaire contenant de la chaux vive, revêtu avec une couche protectrice d'un phosphate de calcium faiblement soluble, caractérisés en ce que le phosphate de calcium faiblement soluble consiste en au moins un membre du groupe consistant en une apatite, un orthophosphate de calcium et un phosphate de calcium condensé.

2. Agrégats résistant à l'extinction suivant la revendication 1, dans lesquels le clinker est un clinker à base de dolomite ou un clinker à base de chaux calcinée.

3. Agrégats résistant à l'extinction suivant la revendication 1 ou 2, dans lesquels le phosphate de calcium faiblement soluble est au moins un membre choisi dans le groupe consistant en hydroxy-apatite, phosphate secondaire de calcium, phosphate tertiaire de calcium et phosphate de calcium condensé.

4. Agrégats résistant à l'extinction suivant la revendication 1, dans lesquels le clinker est un clinker à base de dolomite et le phosphate de calcium faiblement soluble consiste en hydroxy-apatite.

5. Procédé de production d'agrégats résistant à l'extinction, qui comprend le maintien d'un clinker granulaire contenant de la chaux vive en contact étroit avec un acide phosphorique ou phosphate pour le revêtement de la surface du clinker granulaire avec une couche de phosphate de calcium faiblement soluble, qui est au moins un membre choisi dans le groupe consistant en une apatite, un orthophosphate de calcium et un phosphate de calcium condensé.

6. Procédé de production d'agrégats résistant à l'extinction, qui comprend le maintien d'un clinker granulaire à base de chaux vive en contact étroit avec un acide phosphorique ou un phosphate, puis la calcination du clinker ayant été soumis au contact à une température égale ou supérieure à 300 °C pour le revêtement de la surface du clinker granulaire avec une couche protectrice d'un phosphate de calcium faiblement soluble, qui est au moins un membre choisi dans le groupe consistant en une apatite, un orthophosphate de calcium et un phosphate de calcium condensé.

**7.** Procédé suivant la revendication 5 ou 6, dans lequel le contact intime est réalisé par immersion du clinker granulaire dans une solution d'un acide phosphorique ou phosphate, puis par séchage du clinker ayant été soumis au contact.

**8.** Procédé suivant la revendication 5 ou 6, dans lequel le contact intime est réalisé par pulvérisation d'une solution d'un acide phosphorique ou phosphate sur le clinker granulaire, puis par séchage du clinker ayant été soumis au contact.

**9.** Procédé suivant la revendication 6, dans lequel le contact intime est réalisé par mélange d'un phosphate solide au clinker granulaire.

**10.** Procédé suivant la revendication 5 ou 6, dans lequel l'acide phosphorique ou le phosphate est utilisé en une quantité de 0,25 à 10 % en poids du clinker.

**11.** Procédé suivant la revendication 5 ou 6, dans lequel le clinker est un clinker à base de dolomite ou un clinker à base de chaux calcinée, l'acide phosphorique consiste en acide orthophosphorique ou acide phosphorique condensé, et le phosphate est au moins un membre choisi dans le groupe consistant en orthophosphates et phosphates condensés de métaux alcalins, de métaux alcalino-terreux, de zinc, d'aluminium, de fer et d'ammonium.

FIG. 1

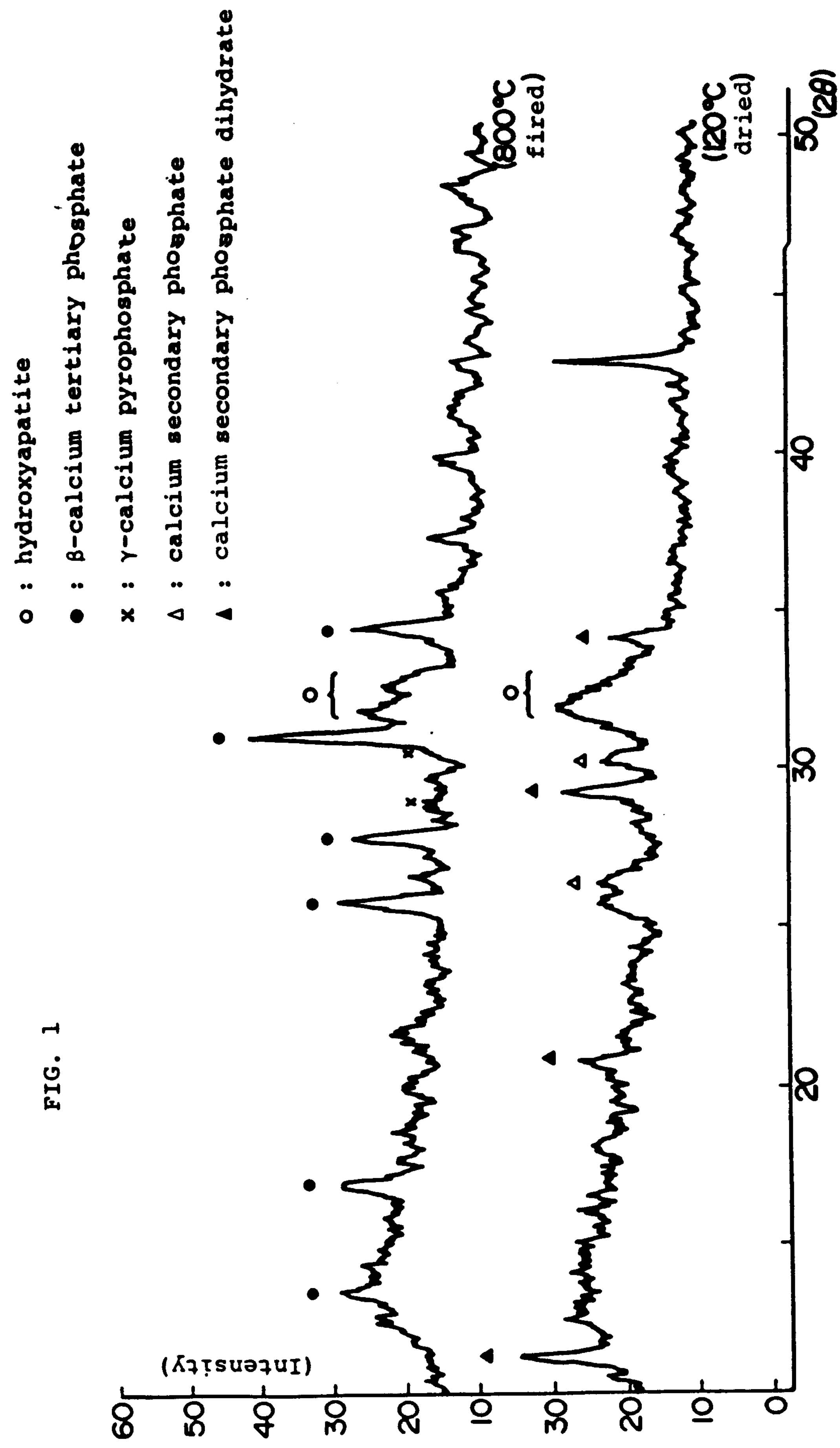
o : hydroxyapatite
● : β-calcium tertiary phosphate
x : γ-calcium pyrophosphate
Δ : calcium secondary phosphate
▲ : calcium secondary phosphate dihydrate
(Intensity)
(800°C fired)
(120°C dried)
(2θ)
60
50
40
30
20
10
30
20
10
0
20
30
40
50